# EUROPÄISCHE PATENTSCHRIFT

(11) **EP 2 773 485 B1**
(45) Veröffentlichungstag und Bekanntmachung des Hinweises auf die Patenterteilung: **13.01.2016**
(21) Anmeldenummer: 12745432.0
(22) Anmeldetag: 20.07.2012
(51) Int. Cl.: B23K 37/00, F16P 1/06, F16P 3/00, B23K 26/06

(54) **LASERANLAGE MIT EINER PARALLEL ZU EINEM LASERLICHTKABEL VERLAUFENDEN DATENVERBINDUNG ZWISCHEN LASER UND LASERBEARBEITUNGSEINHEIT**
LASER SYSTEM HAVING A DATA CONNECTION BETWEEN LASER AND LASER PROCESSING UNIT RUNNING PARALLEL TO A LASER LIGHT CABLE
SYSTÈME LASER COMPORTANT UNE CONNEXION DE DONNÉES ENTRE LE LASER ET UNE UNITÉ DE TRAITEMENT AU LASER LAQUELLE EST PARALLÈLE À UN CÂBLE CONDUCTEUR DE LUMIÈRE LASER

(30) Priorität: 02.11.2011 DE 102011085593
(43) Veröffentlichungstag der Anmeldung: 10.09.2014
(73) Patentinhaber: TRUMPF Laser GmbH, 78713 Schramberg (DE)
(72) Erfinder: THIERINGER, Rainer, 78662 Bösingen (DE)
(74) Vertreter: Kohler Schmid Möbus Patentanwälte
(86) Internationale Anmeldenummer: PCT/EP2012/064267
(87) Internationale Veröffentlichungsnummer: WO 2013/064277

(56) Entgegenhaltungen:
- DE-A1- 3 813 789
- DE-A1- 10 018 422
- US-A1- 2008 051 913

## Beschreibung

Die vorliegende Erfindung betrifft eine Laseranlage, insbesondere Lasernetzwerk, gemäß dem Oberbegriff des Anspruchs 1.

Eine derartige Laseranlage ist beispielsweise durch die DE 100 18 422 A1 bekannt geworden.

Diese bekannte Laseranlage umfasst mehrere Laser und mehrere Laserbearbeitungseinheiten, welche jeweils über ein Laserlichtkabel und über eine dazu parallele Datenleitung an den jeweiligen Laser angeschlossen sind. Jede Laserbearbeitungseinheit weist einen Sicherheitsschaltkreis auf, der den Zustand (offen oder geschlossen) einer Arbeitskabine der Laserbearbeitungseinheit überprüft und im Falle einer offenen Arbeitskabine ein Stopsignal an die Lasersteuerung des zugehörigen Lasers ausgibt.

Bei modernen Laseranlagen mit mehreren Lasern und Laserbearbeitungseinheiten sollen die elektrischen Sicherheitskreise von einer zentralen Sicherheitssteuerung, wie z.B. von einer speicherprogrammierbaren Sicherheitssteuerung ("Sicherheits-SPS"), überwacht werden, an die über einen Bus ("Safety-Bus") alle Laser und Laserbearbeitungseinheiten angeschlossen sind. Zur Anbindung an den Safety-Bus ist an jedem Laser eine entsprechende Busschnittstelle vorgesehen.

Beim Aufbau der Laseranlage müssen nicht nur die Laserlichtkabel an die Laser angeschlossen werden, sondern auch die Busschnittstellen der Laser an den Safety-Bus angeschlossen werden, z.B. über elektrische oder optische Kabel, was einen gewissen Verkabelungsaufwand bedeutet und das Risiko von Verkabelungsfehlern erhöht; denkbar ist aber auch eine Anbindung über Funk, was das Risiko von Konfigurationsfehlern birgt.

Die Zuordnung der einzelnen elektrischen Sicherheitskreise bzw. ihrer zugehörigen Laserbearbeitungseinheiten zu den jeweiligen Lasern sollte in einer unveränderlichen und somit normgerecht sicheren Sicherheitsmatrix der Sicherheits-SPS hinterlegt sein. Über die Sicherheits-SPS ist somit eindeutig festgelegt, welcher Laser im Falle eines geöffneten Sicherheitskreises einer Laserbearbeitungseinheit abzuschalten oder zu blockieren ist. Aufgrund der fest vorgegebenen Sicherheitsmatrix darf bei mehreren Lasern ein Laserlichtkabel weder von einem Laser an einen anderen Laser noch von einer Laserbearbeitungseinheit des einen Lasers an eine Laserbearbeitungseinheit des anderen Lasers umgesteckt werden, weil dies im Falle eines geöffneten Sicherheitskreises dann nicht zur Abschaltung des tatsächlich angeschlossenen Lasers führt.

Es ist daher Aufgabe der vorliegenden Erfindung, bei einer Laseranlage der eingangs genannten Art den Verkabelungsaufwand und das Risiko von Verkabelungsfehlern zu reduzieren sowie das freie Umstecken von Laserlichtkabeln von einem Laser auf einen anderen Laser und von einer Laserbearbeitungseinheit auf eine andere Laserbearbeitungseinheit zu ermöglichen.

Eine Laseranlage gemäß der Erfindung ist im Anspruch 1 definiert.

Erfindungsgemäß ist der Laser über die parallel zum Laserlichtkabel verlaufende Datenleitung an die auf der Seite der Laserbearbeitungseinheit vorgesehene Schnittstelle der zentralen Sicherheitssteuerung und auch an eine Schnittstelle der zentralen Anlagensteuerung angeschlossen, wobei diese beiden Schnittstellen physisch auch als eine Schnittstelle ausgebildet sein können und wobei dann die Signale von Anlagen- und Sicherheitssteuerung logisch voneinander getrennt werden. Da die mindestens eine Schnittstelle für Feldbus und Sicherheitskreis erfindungsgemäß auf die dem Laser abgewandte Seite des Lichtleitkabels, also zur Bearbeitungsoptik der Laserbearbeitungseinheit, gewandert ist, muss im Laser selbst kein Platz für Schnittstellenmodule vorgehalten werden. Da beim Umstecken eines Laserlichtkabels in einen anderen Laser oder in eine andere Laserbearbeitungseinheit die zugehörige Datenleitung ebenfalls zum anderen Laser bzw. zur anderen Laserbearbeitungseinheit mitwandert, können Lichtleiterkabel frei umgesteckt werden, und zwar auch bei Verwendung einer fest hinterlegten Sicherheitsmatrix. Denn im Falle eines geöffneten Sicherheitskreises einer Laserbearbeitungseinheit schaltet die zentrale Sicherheitssteuerung über die Schnittstelle dieser Laserbearbeitungseinheit und über die parallel zum Laserlichtkabel verlaufende Datenleitung stets den tatsächlich angeschlossenen Laser ab.

Durch die eindeutige Zuordnung von Datenleitung zu Laserlichtkabel, z.B. in Form eines Kabelbündels oder eines einzigen Kabels, ist sichergestellt, dass Datenleitung und dazugehöriges Laserlichtkabel stets an den gleichen Laser und an die gleiche Laserbearbeitungseinheit angeschlossen werden. Die eindeutige Zuordnung kann auch über einen Prüfzyklus geschehen, z.B. indem ein Pilotlaserstrahl, d.h. ein ungefährlicher, schwacher Laserstrahl, vom Laser durch das Laserlichtkabel geschickt wird und z.B. mittels eines Detektors geprüft wird, ob das Pilotlicht an der Laserbearbeitungseinheit bzw. der Bearbeitungsoptik ankommt, an der die Datenleitung angeschlossen ist. Vorteilhafterweise befindet sich an der Laserbearbeitungseinheit die Schnittstelle(n) für Feldbus und Sicherheitskreis unmittelbar neben dem Anschluss für das Laserlichtkabel, also an einer Bearbeitungsoptik, z.B. dem Laserschneidkopf, oder in deren Umgebung. Besonders vorteilhaft ist es, wenn die Schnittstelle(n) für Feldbus und Sicherheitskreis, sowie der Anschluss des Laserlichtkabels direkt an der Bearbeitungsoptik angebracht sind, da diese oft auch vom Laserhersteller zur Verfügung gestellt wird, und somit die Erfindung auch dann eingesetzt werden kann, wenn die Bearbeitungsoptik beispielsweise in Kombination mit einer Automatisierungstechnik eines anderen Herstellers, wie z.B. einem Roboter, einer Laserflachbettmaschine oder einer Stanz-Laserkombinationsmaschine eingesetzt wird, die die für die Erfindung notwendigen Schnittstellen nicht zur Verfügung stellt.

Vorzugsweise sind die Feldbus- und Sicherheitskreis-Schnittstellen einer Laserbearbeitungseinheit gemeinsam in einem Schnittstellenmodul vorgesehen.

Die Datenleitung kann beispielsweise durch eine einzige elektrische Leitung oder durch zwei elektrische Leitungen für eine separate Übertragung von Anlagensteuerungsdaten und von Sicherheitssteuerungsdaten oder durch einen parallel zum Lichtleiter des Laserlichtkabels verlaufenden weiteren Lichtleiter oder aber durch den Lichtleiter des Laserlichtkabels gebildet sein.

Neben Lasern mit mehreren Laserabgängen ist die Erfindung auch für Laser mit einem einzigen Laserabgang vorteilhaft und wirtschaftlich, da ein solcher Laser im Falle eines Defekts unabhängig von der Automatisierungstechnik des Anwenders ausgetauscht werden kann.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die erfindungsgemäße Laseranlage mit zwei Lasern und mit vier Laserbearbeitungseinheiten, die jeweils über ein Laserlichtkabel und eine dazu parallele Datenleitung an die Laser angeschlossen sind;
- Fig. 2: die in Fig. 1 gezeigte Laseranlage nach dem Umstecken eines an einem Laser angeschlossenen Laserlichtkabels von einer Laserbearbeitungseinheit auf eine andere Laserbearbeitungseinheit;
- Fig. 3: die in Fig. 1 gezeigte Laseranlage nach dem Umstecken eines an einer Laserbeärbeitungseinheit angeschlossenen Laserlichtkabels von einem Laser auf einen anderen Laser; und
- Fign. 4 bis 6: die erfindungsgemäße Laseranlage mit jeweils modifizierten Datenleitungen.

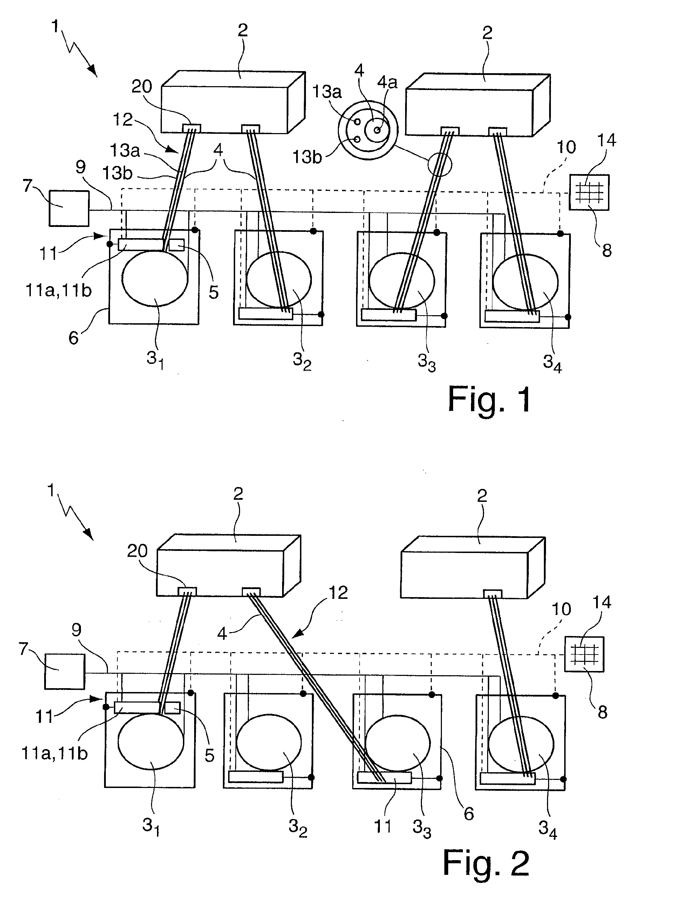

Die in **Fig. 1** gezeigte Laseranlage **1** ist ein Lasernetzwerk mit zwei Lasern **2** und mit vier Laserbearbeitungseinheiten **3₁-3₄,** die jeweils über ein Laserlichtkabel **4** an einen der beiden Laser 2 angeschlossen sind. Das Laserlichtkabel 4 ist einenends an einen optischen Ausgang bzw. Abgang des Lasers 2 und anderenends an eine Bearbeitungsoptik **5** der Laserbearbeitungseinheit 3₁-3₄, z.B. an den Laserschneidkopf eines Roboters, einer Laserflachbettmaschine oder einer Stanz-Laserkombinationsmaschine, angeschlossen, um die im Laser 2 erzeugte Laserstrahlung im Lichtleiter **4a** des Laserlichtkabels 4 zur jeweiligen Laserbearbeitungseinheit 3₁-3₄ zu führen. Die Bearbeitungsoptik 5 kann beispielsweise an einem Roboterarm (nicht gezeigt) angebracht sein, um die aus der Bearbeitungsoptik 5 austretende Laserstrahlung gegenüber einem zu bearbeitenden Werkstück auszurichten und zu bewegen. Jede Laserbearbeitungseinheit 3₁-3₄ weist eine Sicherheitseinrichtung **6** in Form eines elektrischen Sicherheitskreises auf, um eine Laserschutzkabine (nicht gezeigt) der jeweiligen Laserbearbeitungseinheit 3₁-3₄ auf korrekten Schließzustand zu überwachen.

Zum Steuern der Laser 2 und der Laserbearbeitungseinheiten 3₁-3₄ weist die Laseranlage 1 eine zentrale Anlagensteuerung ("Anlagen-SPS") **7** sowie zum Überwachen der Sicherheitseinrichtungen 6 eine zentrale Sicherheitssteuerung ("Sicherheits-SPS") **8** auf. Alternativ kann jede Laserbearbeitungseinheit 3₁-3₄ auch über eine lokale SPS oder über eine beliebige Kombination aus Anlagen-SPS und lokaler SPS gesteuert werden. Die Laserbearbeitungseinheiten 3₁-3₄ sind über einen Feldbus **9** (z.B. PROFInet) an die zentrale Anlagensteuerung 7 und ihre Sicherheitseinrichtungen 6 über einen weiteren Bus ("Safety-Bus") **10** an die zentrale Sicherheitssteuerung 8 angeschlossen.

Jede Laserbearbeitungseinheit 3₁-3₄, und insbesondere deren Bearbeitungsoptik 5, umfasst ferner ein Schnittstellenmodul **11** mit einer Feldbus-Schnittstelle **11a,** die einerseits über den Feldbus 9 an die zentrale Anlagensteuerung 7 und andererseits über eine parallel zum Laserlichtkabel 4 verlaufende Datenleitung **12** auch an den jeweiligen Laser 2 angeschlossen ist, und mit einer Sicherheitskreis-Schnittstelle **11b**, die einerseits über den Safety-Bus 10 an die zentrale Sicherheitssteuerung 8 und andererseits über die parallel zum Laserlichtkabel 4 verlaufende Datenleitung 12 auch an den jeweiligen Laser 2 angeschlossen ist. Diese Datenleitung 12 ist durch eine erste elektrische Leitung **13a** für die Übertragung von Anlagensteuerdaten und eine zweite elektrische Leitung **13b** für eine Übertragung von Sicherheitssteuerdaten gebildet. Die beiden elektrischen Leitungen 13a, 13b und das Laserlichtkabel 4 sind einander eindeutig zugeordnet, z.B. durch Verbinden aller Kabel an ihren Enden oder durch Zusammenfassen der elektrischen Leitungen 13a, 13b und des Laserlichtkabels 4 zu einem einzigen Kabel. Die Schnittstellen 11 a, 11 b bzw. das Schnittstellenmodul 11 sind vorzugsweise an der Bearbeitungsoptik 5 angebracht oder in deren Umgebung angeordnet, wie für die Laserbearbeitungseinheit 3₁ gezeigt ist; lediglich aus Übersichtlichkeitsgründen sind die Schnittstellenmodule 11 der anderen Laserbearbeitungseinheit 3₁-3₄ an anderer Stelle gezeigt. Das Laserlichtkabel 4 samt der zugeordneten Datenleitung 12 sind über eine Schnittstelle **20** mit dem Laser 2 verbunden.

**Fig. 2** zeigt die Laseranlage 1 nach dem Umstecken eines an einem Laser 2 angeschlossenen Laserlichtkabels 4 von der Laserbearbeitungseinheit 3₂ auf die andere Laserbearbeitungseinheit 3₃. Das Laserlichtkabel 4 ist nunmehr an die Bearbeitungsoptik 5 der anderen Laserbearbeitungseinheit 3₃ und die Datenleitung 12 nunmehr an die Schnittstellen 11a, 11b der anderen Laserbearbeitungseinheit 3₃ angeschlossen. Da beim Umstecken des Laserlichtkabels 4 die zugehörige Datenleitung 12 ebenfalls zur anderen Laserbearbeitungseinheit 3₃ mitwandert, kann das Lichtleiterkabel 4 frei umgesteckt werden, und zwar auch bei Verwendung einer in der zentralen Sicherheitssteuerung 8 fest hinterlegten Sicherheitsmatrix **14**. Denn im Falle einer Öffnung im Sicherheitskreis 6 der Sicherheitseinrichtung der Laserbearbeitungseinheit 3₃ schaltet die zentrale Sicherheitssteuerung 8 über die Schnittstelle 11 a der Laserbearbeitungseinheit 3₃ und über die parallel zum Laserlichtkabel 4 verlaufende Datenleitung 12 den an die Laserbearbeitungseinheit 3₃ angeschlossenen Laser 2 ab. Somit wird in der Sicherheitsmatrix 14 nicht mehr zugeordnet, welcher Laser im Falle eines geöffneten Sicherheitskreises der Sicherheitseinrichtung 6 einer Laserbearbeitungseinheit 3 abzuschalten oder, z.B. durch Blockieren des Laserstrahls, zu sichern ist. Stattdessen wird in der Sicherheitsmatrix 14 jeder Laserbearbeitungseinheit 3 ihre dazugehörige Schnittstelle 11a zugeordnet, wodurch im Falle eines geöffneten Sicherheitskreises 6 einer Laserbearbeitungseinheit 3 stets die dazugehörige Schnittstelle 11a angesprochen wird, wodurch über die daran angeschlossene, parallel zum Laserlichtkabel 4 verlaufende Datenleitung 12 stets derjenige Laser 2 abgeschaltet oder gesichert wird, der tatsächlich an die jeweilige Laserbearbeitungseinheit angeschlossen ist.

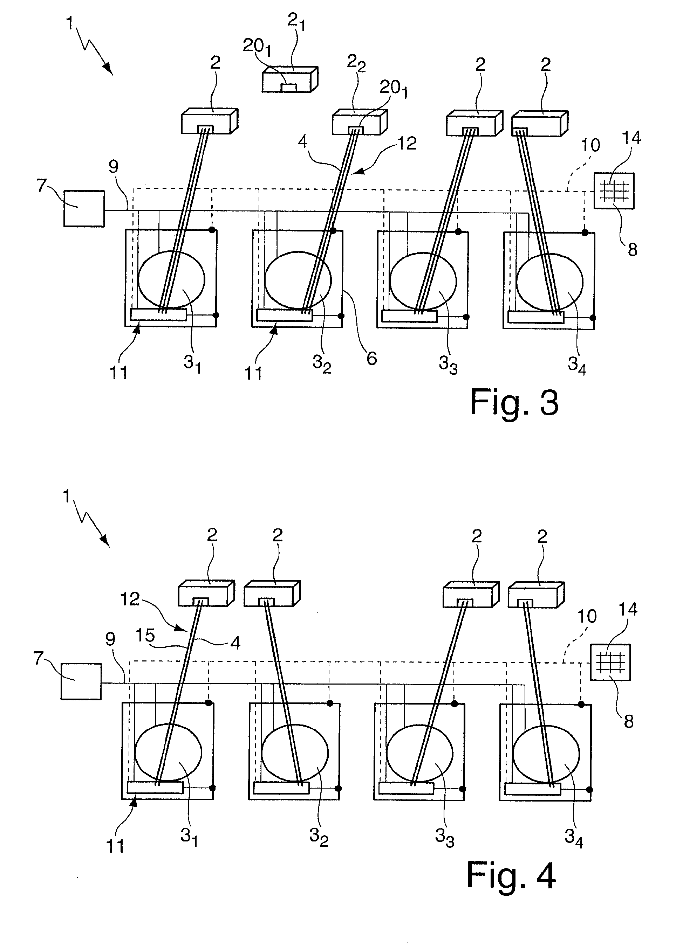

**Fig. 3** zeigt die Laseranlage 1 nach dem Umstecken des an der Laserbearbeitungseinheit 3₂ angeschlossenen Laserlichtkabels 4 von der Schnittstelle **20₁** eines Lasers **2₁** auf die Schnittstelle **20₂** eines anderen Lasers **2₂**. Da beim Umstecken des Laserlichtkabels 4 die zugehörige Datenleitung 12 ebenfalls zum anderen Laser 2₂ mitwandert, kann das Lichtleiterkabel 4 frei umgesteckt werden, und zwar auch bei Verwendung einer Sicherheitsmatrix 14. Denn im Falle einer Öffnung im Sicherheitskreis 6 der Laserbearbeitungseinheit 3₂ schaltet die zentrale Sicherheitssteuerung 8 über die Schnittstelle 11a der Laserbearbeitungseinheit 3₂ und über die parallel zum Laserlichtkabel 4 verlaufende Datenleitung 12 den an die Laserbearbeitungseinheit 3₂ angeschlossenen Laser 2₂ ab bzw. blockiert dessen Laserstrahl. Somit ist eine direkte Zuordnung von Laser 2 zu Sicherheitseinrichtung 6 einer Laserbearbeitungseinheit 3 in der Sicherheitsmatrix 14 nicht mehr notwendig.

Über die Datenleitung 12 können bei Verwendung eines entsprechenden Sicherheitsprotokolls auch sichere diskrete oder analoge Werte übertragen werden, die beispielsweise für die sichere Leistungsbegrenzung jedes einzelnen Lichtwegs bezogen auf die Beschaffenheit der jeweiligen Laserbearbeitungseinheit verwendet werden können. So kann beispielsweise geprüft werden, ob die maximale Laserleistung am Abgang des Lasers an die Bearbeitungsoptik 5 der Laserbearbeitungseinheit angelegt werden kann; wenn nicht, kann die Laserstrahlung sicher - z.B. über eine vom Sicherheitskreis gesteuerte Verschlussweiche - abgeschaltet werden.

In **Fig. 4** ist die Datenleitung 12 durch eine einzige Ethernetleitung **15** gebildet, über die der Datenaustausch zwischen Schnittstelle 11 und Laser 2, d.h. die Übertragung von Anlagensteuerdaten und Sicherheitssteuerdaten, erfolgt.

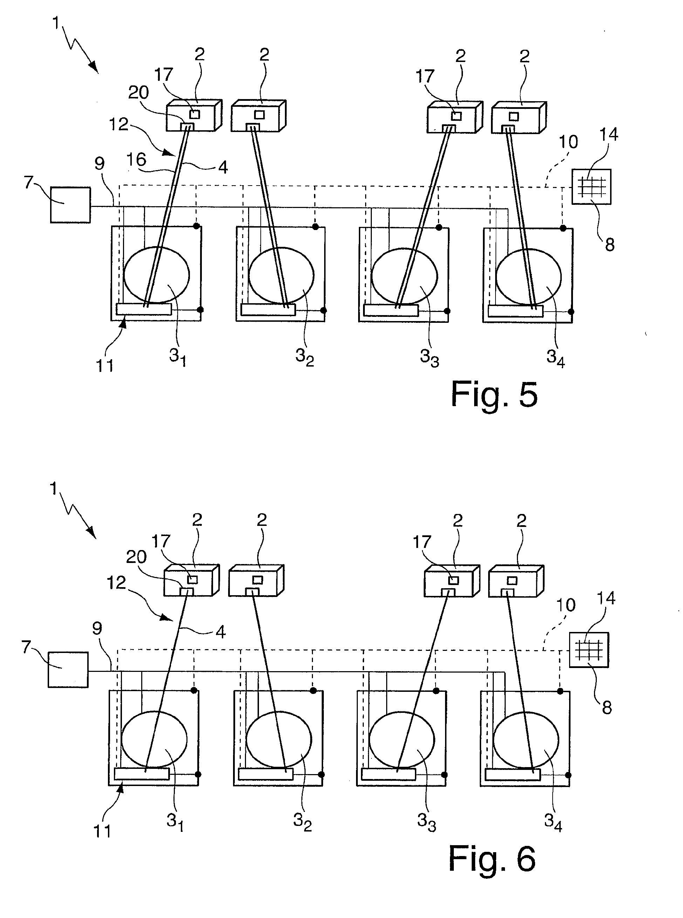

In **Fig. 5** ist die Datenleitung 12 durch einen weiteren Lichtleiter **16** gebildet, über den der Datenaustausch zwischen Schnittstelle 11 und Laser 2, d.h. die Übertragung von Anlagensteuerdaten und Sicherheitssteuerdaten, optisch erfolgt. Hierfür sind an Laser 2 und Schnittstelle 11 entsprechende elektro-optische Wandler **17** als Sender und Empfänger vorgesehen.

In **Fig. 6** ist die Datenleitung 12 durch den Lichtleiter 4a des Laserlichtkabels 4 gebildet, über den sowohl die Laserstrahlung vom Laser 2 zur Laserbearbeitungseinheit 3 als auch der optische Datenaustausch zwischen Schnittstelle 11 und Laser 2, d.h. die Übertragung von Anlagensteuerdaten und Sicherheitssteuerdaten, erfolgen.

## Patentansprüche

1. Laseranlage (1), insbesondere Lasernetzwerk,
mit mindestens einem Laser (2) und
mit mindestens einer Laserbearbeitungseinheit (3), die über ein Laserlichtkabel (4) und über eine dem Laserlichtkabel (4) eindeutig zugeordnete Datenleitung (12) an den mindestens einen Laser (2) angeschlossen ist und die eine Sicherheitseinrichtung (6) zum Überwachen der Laserbearbeitungseinheit (3) und eine Schnittstelle (11b) für die Datenleitung (12) aufweist,
**dadurch gekennzeichnet,**
**dass** zum Überwachen der Sicherheitseinrichtungen (6) aller Laserbearbeitungseinheiten (3) der Laseranlage (1) eine zentrale Sicherheitssteuerung (8) vorgesehen ist, die mit jedem Laser (2) der Laseranlage (1) über die Schnittstelle (11 b) der jeweiligen Laserbearbeitungseinheit (3) verbunden ist, die auf der einen Seite mit der zentralen Sicherheitssteuerung (8) und auf der anderen Seite über die angeschlossene Datenleitung (12) lediglich mit dem jeweiligen Laser (2) verbunden ist.

2. Laseranlage nach Anspruch 1, **dadurch gekennzeichnet, dass** die Laseranlage (1) eine zentrale Anlagensteuerung (7) zum Steuern jedes Lasers (2) und jeder Laserbearbeitungseinheit (3) der Laseranlage (1) aufweist.

3. Laseranlage nach Anspruch 2, **dadurch gekennzeichnet, dass** jede Laserbearbeitungseinheit (3) der Laseranlage (1) eine Schnittstelle (11a) aufweist, die einerseits an die zentrale Anlagensteuerung (7) und andererseits über eine Datenleitung (12) an den jeweiligen Laser (2) angeschlossen ist.

4. Laseranlage nach Anspruch 2 oder 3, **dadurch gekennzeichnet, dass** jede Laserbearbeitungseinheit (3) der Laseranlage (1) eine erste Schnittstelle (11a), die einerseits an die zentrale Anlagensteuerung (7) und andererseits über die Datenleitung (12) an den jeweiligen Laser (2) angeschlossen ist, und eine zweite Schnittstelle (11b), die einerseits an die zentrale Sicherheitssteuerung (8) und andererseits über die Datenleitung (12) an den jeweiligen Laser (2) angeschlossen ist, aufweist.

5. Laseranlage nach einem der vorhergehenden Ansprüche, **dadurch gekennzeichnet, dass** mindestens eine der Schnittstellen (11a, 11b) an einer Bearbeitungsoptik (5) der Laserbearbeitungseinheit (3), an die das Laserlichtkabel (4) angeschlossen ist, oder in deren Umgebung vorgesehen ist.

6. Laseranlage nach einem der vorhergehenden Ansprüche, **dadurch gekennzeichnet, dass** die Schnittstellen (11a) der Laserbearbeitungseinheiten (3) über einen Bus (9) an die zentrale Anlagensteuerung (7) angeschlossen sind.

7. Laseranlage nach einem der vorhergehenden Ansprüche, **dadurch gekennzeichnet, dass** die Schnittstellen (11b) der Laserbearbeitungseinheiten (3) über einen Bus (10) an die zentrale Sicherheitssteuerung (8) angeschlossen sind.

8. Laseranlage nach einem der vorhergehenden Ansprüche, **dadurch gekennzeichnet, dass** die zentrale Sicherheitssteuerung (8) eine Sicherheitsmatrix (14) aufweist, in der die Zuordnung hinterlegt ist, über welche Schnittstelle (11 b) im Falle eines geöffneten Sicherheitskreises (6) einer Laserbearbeitungseinheit (3) ein zugeordneter Laser (2) abzuschalten ist.

9. Laseranlage nach einem der vorhergehenden Ansprüche, **dadurch gekennzeichnet, dass** die Datenleitung (12) durch zwei elektrische Leitung (13a, 13b) für eine separate Übertragung von Anlagensteuerdaten und von Sicherheitssteuerdaten gebildet ist.

10. Laseranlage nach einem der Ansprüche 1 bis 8, **dadurch gekennzeichnet, dass** die Datenleitung (12) durch eine einzige elektrische Leitung (15) gebildet ist.

11. Laseranlage nach einem der Ansprüche 1 bis 8, **dadurch gekennzeichnet, dass** die Datenleitung (12) durch den Lichtleiter (4a) des Laserlichtkabels (4) oder durch einen weiteren Lichtleiter (16) gebildet ist.

12. Laseranlage nach einem der vorhergehenden Ansprüche, **dadurch gekennzeichnet, dass** das Laserlichtkabel (4) und die mindestens eine Datenleitung (12) zu einem Kabelbündel oder zu einem einzigem Kabel zusammengefasst sind.

13. Laseranlage nach einem der vorhergehenden Ansprüche, **dadurch gekennzeichnet, dass** das Laserlichtkabel (4) zum Weiterleiten eines Pilotlaserstrahls und die Laserbearbeitungsanlage (3) zum Anfordern und Detektieren des Pilotlaserstrahls ausgebildet ist, wodurch die mindestens eine Datenleitung (12) dem Laserlichtkabel (4) zugeordnet ist.

14. Laseranlage nach einem der vorhergehenden Ansprüche, **dadurch gekennzeichnet, dass** die Schnittstelle oder -stellen (11a, 11 b) einer Laserbearbeitungseinheit (3) in einem Schnittstellenmodul (11) vorgesehen sind.

15. Laseranlage nach einem der vorhergehenden Ansprüche, **dadurch gekennzeichnet, dass** der mindestens eine Laser (2) eine Schnittstelle (20) für das Laserlichtkabel (4) und die Datenleitung (12) aufweist.

## Claims

1. Laser system (1), in particular a laser network, comprising at least one laser (2) and
at least one laser processing unit (3) which is connected to the at least one laser (2) by means of a laser light cable (4) and a data line (12) associated uniquely with the laser light cable (4) and which comprises a safety device (6) for monitoring the laser processing unit (3) and an interface (11 b) for the data line (12),
**characterised in that**
a central safety control (8) for monitoring the safety devices (6) of all the laser processing units (3) of the laser system (1) is provided which is connected to each laser (2) of the laser system (1) via the interface (11 b) of the respective laser processing unit (3) which is connected, at the one hand, to the central safety control (8) and, at the other hand, via the connected data line (12) merely to the respective laser (2).

2. Laser system according to claim 1, **characterised in that** the laser system (1) comprises a central system control (7) for controlling each laser (2) and each laser processing unit (3) of the laser system (1).

3. Laser system according to claim 2, **characterised in that** each laser processing unit (3) of the laser system (1) comprises an interface (11 a) which is connected, on the one hand, to the central system control (7) and, on the other hand, via a data line (12) to the respective laser (2).

4. Laser system according to claim 2 or claim 3, **characterised in that** each laser processing unit (3) of the laser system (1) comprises a first interface (11 a) which is connected, on the one hand, to the central system control (7) and, on the other hand, via the data line (12) to the respective laser (2), and a second interface (11 b) which is connected, on the one hand, to the central safety control (8) and, on the other hand, via the data line (12) to the respective laser (2).

5. Laser system according to any one of the preceding claims, **characterised in that** at least one of the interfaces (11 a, 11 b) is connected to a processing optics (5) of the laser processing unit (3), to which the laser light cable (4) is connected, or is provided in the vicinity thereof.

6. Laser system according to any one of the preceding claims, **characterised in that** the interfaces (11a) of the laser processing units (3) are connected to the central system control (7) by means of a bus (9).

7. Laser system according to any one of the preceding claims, **characterised in that** the interfaces (11 b) of the laser processing units (3) are connected to the central safety control (8) by means of a bus (10).

8. Laser system according to any one of the preceding claims, **characterised in that** the central safety control (8) has a safety matrix (14) in which the association is stored, via which interface (11 b) an associated laser (2) is intended to be switched off in the event of an open safety circuit (6) of a laser processing unit (3).

9. Laser system according to any one of the preceding claims, **characterised in that** the data line (12) is formed by means of two electrical lines (13a, 13b) for a separate transmission of system control data and safety control data.

10. Laser system according to any one of claims 1 to 8, **characterised in that** the data line (12) is formed by a single electrical line (15).

11. Laser system according to any one of claims 1 to 8, **characterised in that** the data line (12) is formed by the light guide (4a) of the laser light cable (4) or by an additional light guide (16).

12. Laser system according to any one of the preceding claims, **characterised in that** the laser light cable (4) and the at least one data line (12) are joined together to form a cable bundle or a single cable.

13. Laser system according to any one of the preceding claims, **characterised in that** the laser light cable (4) is constructed for transmitting a pilot laser beam and the laser processing unit (3) is constructed for requesting and detecting the pilot laser beam, whereby the at least one data line (12) is associated with the laser light cable (4).

14. Laser system according to any one of the preceding claims, **characterised in that** the interface(s) (11 a, 11 b) of a laser processing unit (3) is/are provided in an interface module (11).

15. Laser system according to any one of the preceding claims, **characterised in that** the at least one laser (2) comprises an interface (20) for the laser light cable (4) and the data line (12).

## Revendications

1. Système laser (1), en particulier réseau laser,
comportant au moins un laser (2) et
au moins une unité d'usinage au laser (3) qui est connectée audit au moins un laser (2) par un câble de lumière laser (4) et par une ligne de données (12) associée sans ambiguïté au câble de lumière laser (4) et qui comporte un dispositif de sécurité (6) pour surveiller l'unité d'usinage au laser (3) et une interface (11b) pour la ligne de données (12),
**caractérisé en ce**
**qu'**une commande centrale de sécurité (8) permettant de surveiller les dispositifs de sécurité (6) de toutes les unités d'usinage au laser (3) du système laser (1) est prévue, laquelle est reliée à chaque laser (2) du système laser (1) via l'interface (11b) de l'unité d'usinage au laser (3) respective, qui est reliée d'un côté à la commande centrale de sécurité (8) et de l'autre côté, par la ligne de données (12) qui y est connectée, seulement au laser (2) respectif.

2. Système laser selon la revendication 1, **caractérisé en ce que** le système laser (1) comporte une commande centrale de système (7) pour commander chaque laser (2) et chaque unité d'usinage au laser (3) du système laser (1).

3. Système laser selon la revendication 2, **caractérisé en ce que** chaque unité d'usinage au laser (3) du système laser (1) comporte une interface (11a) qui est connectée d'un côté à la commande centrale de système (7) et de l'autre côté, par une ligne de données (12), au laser (2) respectif.

4. Système laser selon l'une des revendications 2 ou 3, **caractérisé en ce que** chaque unité d'usinage au laser (3) du système laser (1) comporte une première interface (11a) qui est connectée d'un côté à la commande centrale de système (7) et de l'autre côté, par la ligne de données (12), au laser (2) respectif, et une deuxième interface (11b) qui est connectée d'un côté à la commande centrale de sécurité (8) et de l'autre côté, par la ligne de données (12), au laser (2) respectif.

5. Système laser selon l'une des revendications précédentes, **caractérisé en ce qu'**au moins une des interfaces (11a, 11b) est connectée à une optique d'usinage (5) de l'unité d'usinage au laser (3) à laquelle le câble de lumière laser (4) est connecté, ou est prévue dans ses alentours.

6. Système laser selon l'une des revendications précédentes, **caractérisé en ce que** les interfaces (11a) des unités d'usinage au laser (3) sont connectées à la commande centrale de système (7) par un bus (9).

7. Système laser selon l'une des revendications précédentes, **caractérisé en ce que** les interfaces (11b) des unités d'usinage au laser (3) sont connectées à la commande centrale de sécurité (8) par un bus (10).

8. Système laser selon l'une des revendications précédentes, **caractérisé en ce que** la commande centrale de sécurité (8) comporte une matrice de sécurité (14) dans laquelle est enregistrée l'affectation définissant via quelle interface (11b), dans le cas d'un circuit de sécurité (6) ouvert d'une unité d'usinage au laser (3), un laser (2) associé doit être coupé.

9. Système laser selon l'une des revendications précédentes, **caractérisé en ce que** la ligne de données (12) est formée par deux lignes électriques (13a, 13b) pour une transmission séparée des données de commande du système et des données de commande de sécurité.

10. Système laser selon l'une des revendications 1 à 8, **caractérisé en ce que** la ligne de données (12) est formée par une seule ligne électrique (15).

11. Système laser selon l'une des revendications 1 à 8, **caractérisé en ce que** la ligne de données (12) est formée par le conducteur de lumière (4a) du câble de lumière laser (4) ou par un autre conducteur de lumière (16).

12. Système laser selon l'une des revendications précédentes, **caractérisé en ce que** le câble de lumière laser (4) et ladite au moins une ligne de données (12) sont réunis en un faisceau de câbles ou en un seul câble.

13. Système laser selon l'une des revendications précédentes, **caractérisé en ce que** le câble de lumière laser (4) est conçu pour transmettre un faisceau laser pilote et le système d'usinage au laser (3) pour demander et détecter le faisceau laser pilote, moyennant quoi ladite au moins une ligne de données (12) est associée au câble de lumière laser (4).

14. Système laser selon l'une des revendications précédentes, **caractérisé en ce que** l'interface ou les interfaces (11a, 11b) d'une unité d'usinage au laser (3) est/sont prévue(s) dans un module d'interface (11).

15. Système laser selon l'une des revendications précédentes, **caractérisé en ce que** ledit au moins un laser (2) comporte une interface (20) pour le câble de lumière laser (4) et la ligne de données (12).
